(19) Europäisches Patentamt / European Patent Office / Office européen des brevets

(11) **EP 3 743 300 B1**

(12) **FASCICULE DE BREVET EUROPEEN**

(45) Date de publication et mention de la délivrance du brevet:
**29.03.2023 Bulletin 2023/13**

(21) Numéro de dépôt: **19710605.7**

(22) Date de dépôt: **21.01.2019**

(51) Classification Internationale des Brevets (IPC):
*B60H 1/06* $^{(2006.01)}$    *B60H 1/32* $^{(2006.01)}$
*B60H 1/00* $^{(2006.01)}$    *F01P 3/00* $^{(2006.01)}$
*F01P 3/20* $^{(2006.01)}$

(52) Classification Coopérative des Brevets (CPC):
**B60H 1/3208; B60H 1/00271; B60H 1/0073; F01P 3/20;** B60H 2001/3261; B60H 2001/3275; F01P 2060/14

(86) Numéro de dépôt international:
**PCT/EP2019/051376**

(87) Numéro de publication internationale:
**WO 2019/141845 (25.07.2019 Gazette 2019/30)**

(54) **DISPOSITIF DE PILOTAGE D'UN ENSEMBLE DE REFROIDISSEMENT POUR VÉHICULE AUTOMOBILE**

VORRICHTUNG ZUR STEUERUNG EINER KÜHLANORDNUNG FÜR EIN KRAFTFAHRZEUG

DEVICE FOR CONTROLLING A COOLING ASSEMBLY FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.01.2018 FR 1850466**

(43) Date de publication de la demande:
**02.12.2020 Bulletin 2020/49**

(73) Titulaire: **Renault s.a.s**
**92100 Boulogne Billancourt (FR)**

(72) Inventeur: **L'HUILLIER, Jean-Marie**
**92130 ISSY LES MOULINEAUX (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
JP-A- H01 223 017    US-A- 5 950 443
US-A1- 2004 134 204    US-A1- 2008 034 767
US-A1- 2011 219 787    US-A1- 2011 271 698

## Description

L'invention concerne le domaine des ensembles de refroidissement pour véhicules automobiles, et plus particulièrement le domaine des dispositifs et procédés de pilotage de tels ensembles.

De manière classique, un système de refroidissement prévu pour refroidir le moteur à combustion interne d'un véhicule automobile comprend un circuit, une pompe et un radiateur. Un liquide de refroidissement circule dans le circuit.

Des véhicules conventionnels comprennent en outre un système de climatisation comprenant un condenseur, un évaporateur permettant de refroidir l'habitacle du véhicule, un organe de détente et un compresseur. Dans la présente demande, l'expression « ensemble de refroidissement » désigne l'ensemble des éléments constituant le système de refroidissement et des éléments constituant le système de climatisation d'un véhicule. Afin de limiter l'encombrement du compartiment moteur du véhicule et de faciliter des opérations de maintenance, le radiateur du système de refroidissement et le condenseur du système de climatisation d'un véhicule sont généralement inclus dans un même sous-ensemble de l'ensemble de refroidissement. Ce sous-ensemble est généralement connu sous l'expression « valise de refroidissement ». Dans ce cas, le radiateur du système de refroidissement et le condenseur du système de climatisation sont très proches l'un de l'autre et situés sur un même flux d'air.

Lorsque la climatisation du véhicule est active, le condenseur du système de climatisation restitue des calories à l'extérieur. En général, le flux d'air traversant ce sous-ensemble récupère d'abord les calories restituées par le condenseur, et ensuite les calories provenant du radiateur de refroidissement. Il peut alors se produire un phénomène de « masque chaud » sur le radiateur du système de refroidissement. Ce phénomène impacte la performance du refroidissement. Dans des conditions de fonctionnement particulières, la température du liquide de refroidissement peut augmenter de sorte à compromettre la tenue et la durabilité des pièces constituant le moteur et le système de refroidissement. De telles conditions de fonctionnement se produisent en particulier lors d'une demande de climatisation forte, d'une température extérieure élevée et d'une forte sollicitation du moteur du véhicule.

Afin de limiter le risque de défaillance d'un composant du moteur et/ou du système de refroidissement, il a été envisagé une sécurité qui est active en cas de montée trop importante de la température du liquide de refroidissement. Lorsque la sécurité est active, l'utilisation de la climatisation est empêchée.

Une telle solution n'est toutefois pas avantageuse, car elle rend indisponible l'utilisation du système de climatisation du véhicule. La sécurité est susceptible d'être active souvent lorsque la température extérieure est importante et/ou lorsque la demande de climatisation est forte, soit lorsque les passagers souhaitent généralement que la climatisation soit disponible.

Cet inconvénient est d'autant plus incommodant que de nouvelles normes antipollution, plus exigeantes, sont susceptibles d'augmenter la fréquence d'activation d'une telle sécurité. En outre, il existe de plus en plus de véhicules présentant des formes choisies de sorte à réaliser un style particulier dans lesquels l'entrée d'air est thermiquement non optimisée. Dans de tels véhicules, la sécurité est trop fréquemment active.

Les publications US2008/034767 A1, 2004/134204 A1, JPH01223017 A et US5950443 A décrivent des systèmes de refroidissement conformes au préambule de la revendication 1.

Au vu de ce qui précède, l'invention a pour but de pallier les inconvénients précités.

Plus particulièrement, l'invention a pour objectif d'assurer la tenue et la durabilité des pièces constituant le moteur et/ou le système de refroidissement d'un véhicule automobile tout en permettant l'utilisation continue d'un système de climatisation équipant le véhicule, y compris lors d'une demande de climatisation forte, d'une température extérieure élevée et d'une forte sollicitation du moteur du véhicule.

A cet effet, il est proposé un dispositif de pilotage d'un ensemble de refroidissement pour véhicule automobile comportant un compresseur de climatisation à pilotage externe, un radiateur de refroidissement ainsi qu'un condenseur situé en amont du radiateur selon le sens du flux d'air. Ce dispositif comporte une boucle de régulation de la température d'un liquide de refroidissement circulant dans ledit radiateur de refroidissement, la boucle de régulation étant apte à délivrer un premier écart corrigé.

Selon une de ses caractéristiques générales, le dispositif comporte un module de pilotage du compresseur de climatisation en fonction du premier écart corrigé.

Grâce à un tel dispositif, il est possible de gérer simultanément le refroidissement et la climatisation pour continuer à utiliser la climatisation tout en refroidissant efficacement le moteur. En particulier, lorsque des conditions de fonctionnement difficiles du véhicule surviennent, le pilotage du compresseur permet de limiter la quantité de calories générée par le condenseur, de sorte à limiter l'apparition du phénomène de masque chaud sans pour autant rendre la climatisation indisponible.

De manière avantageuse, le module de pilotage est capable de piloter la cylindrée du compresseur de climatisation.

Dans un mode de réalisation, le module de pilotage comprend une cartographie dans laquelle sont stockées des valeurs d'une intensité de pilotage d'un actionneur électromagnétique de la rotation d'un plateau support de piston du compresseur de climatisation en fonction du premier écart corrigé.

Selon l'invention, la boucle de régulation comprend un premier comparateur apte à déterminer un premier écart entre une première consigne de température d'air et une température d'air mesurée à la sortie d'un évaporateur de climatisation ou une température mesurée en surface de l'évaporateur de l'ensemble de refroidissement du véhicule automobile, et un premier correcteur capable de corriger ledit premier écart pour délivrer ledit premier écart corrigé.

Grâce à la boucle de régulation ainsi configurée, on régule la température de l'air sortant de l'évaporateur de climatisation du véhicule automobile en agissant sur le compresseur de climatisation.

De préférence, ledit premier correcteur est un correcteur proportionnel intégral dérivé.

La boucle de régulation comprend, selon l'invention, un second comparateur apte à déterminer un second écart entre une deuxième consigne de limitation de température de liquide de refroidissement et une température mesurée du liquide de refroidissement circulant dans ledit radiateur de refroidissement, et un second correcteur capable de corriger le second écart pour calculer un second écart corrigé.

De tels seconds comparateur et correcteur permettent de mettre en oeuvre une régulation de la température de l'air sortant de l'évaporateur et de la température du liquide de refroidissement. On optimise de la sorte encore davantage la gestion du refroidissement du moteur et de la climatisation du véhicule.

Dans un mode de réalisation, ladite deuxième consigne est comprise entre 105 °C et 120 °C, de préférence entre 110 °C et 115 °C.

De telles valeurs pour la deuxième consigne sont particulièrement appropriées assurer la durabilité du moteur thermique.

De préférence, ledit second correcteur est un correcteur proportionnel intégral dérivé.

Selon l'invention, la boucle de régulation comprend un bloc de détermination de ladite première consigne, ledit bloc de détermination choisissant la valeur maximale entre ledit second écart corrigé et une troisième consigne de préférence comprise entre 2 °C et 15 °C, provenant par exemple d'une demande du conducteur du véhicule ou bien d'un module de calcul en amont de la régulation de la température de l'habitacle du véhicule.

Un tel bloc de détermination permet de réguler la température de l'air sortant de l'évaporateur en utilisant cette troisième consigne de température lorsque la température mesurée du liquide de refroidissement est plus faible que ladite deuxième consigne de température du liquide de refroidissement, et de limiter la température mesurée du liquide de refroidissement à la deuxième consigne de température du liquide de refroidissement lorsque la consigne résultante de température de l'évaporateur délivrée par le second correcteur est supérieure à ladite troisième consigne de température. On assure ainsi le refroidissement avec une disponibilité maximale de la climatisation.

Selon un autre aspect, il est proposé un procédé de pilotage d'un ensemble de refroidissement doté d'un radiateur de refroidissement, d'un condenseur situé en amont du radiateur selon le sens du flux d'air, d'un compresseur de climatisation à pilotage externe et d'un dispositif tel que défini précédemment. Selon ce procédé, on met en oeuvre une régulation de la température du liquide de refroidissement en pilotant ledit compresseur de climatisation.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 représente schématiquement un ensemble de refroidissement incorporant un dispositif de pilotage selon l'invention,
- la figure 2 est un schéma-bloc illustrant la boucle de régulation du dispositif de pilotage de la figure 1, et
- la figure 3 représente un procédé de pilotage de l'ensemble de refroidissement de la figure 1.

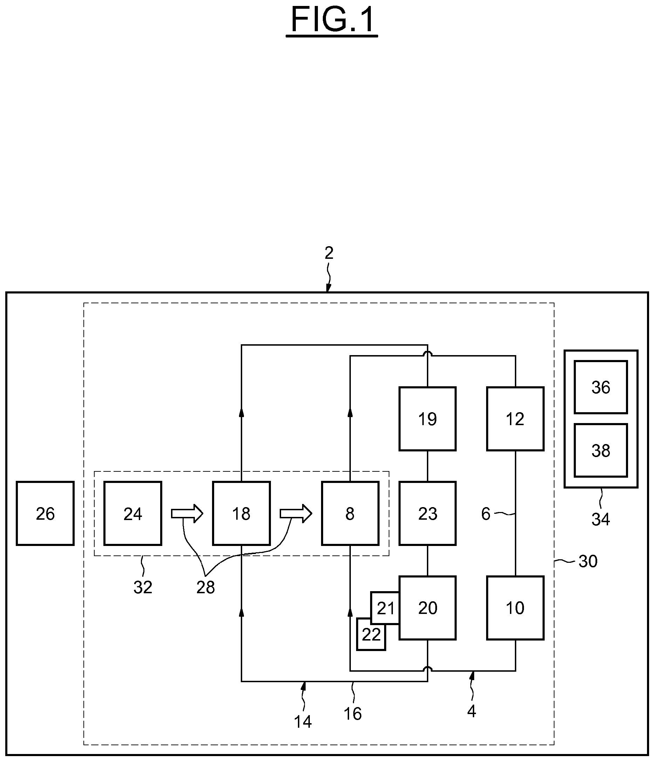

En référence à la figure 1, on a schématiquement représenté un véhicule automobile 2. Le véhicule 2 est notamment doté d'un groupe motopropulseur (non représenté) avec un moteur à combustion interne (non représenté).

Le véhicule 2 comporte un système de refroidissement 4. Le système 4 a pour fonction de refroidir le moteur à combustion interne du véhicule 2. Le système 4 comprend un circuit de refroidissement 6 dans lequel circule un liquide de refroidissement, par exemple de l'eau. Le système 4 comporte un radiateur 8, un échangeur 10 et une pompe 12. Le radiateur 8, l'échangeur 10 et la pompe 12 sont montés en série sur le circuit de refroidissement 6. Le liquide de refroidissement entraîné par la pompe 12 dans le circuit 6 traverse l'échangeur 10 pour prélever des calories du moteur à combustion interne, puis traverse le radiateur 8 pour restituer des calories au système extérieur. On assure ainsi le refroidissement du moteur à combustion interne.

En général, l'échangeur 10 est constitué de l'ensemble du circuit interne de refroidissement de la chambre de combustion et des pièces en mouvement du moteur thermique, donc le moteur thermique lui-même.

Le véhicule 2 comporte un système de climatisation 14. Le système 14 comprend un circuit de climatisation 16 à l'intérieur duquel circule un fluide frigorigène. Le système 14 comporte un condenseur 18, un détendeur 19, un compresseur 20 et un évaporateur 23. Le fluide s'évapore dans l'évaporateur 23 de sorte à prélever des calories issues d'un flux d'air dirigé vers l'habitacle du véhicule 2. Le fluide se condense dans le condenseur 18 de sorte à restituer des calories au système extérieur.

Le compresseur 20 est à pilotage externe afin d'agir sur le débit du fluide frigorigène. En particulier, la cylindrée du compresseur 20 peut être pilotée. Dans l'exemple illustré, le compresseur 20 est un compresseur à plateau oscillant. Le compresseur 20 comporte un plateau support de piston 21. L'angle du plateau 21 par rapport à la direction de déplacement des pistons (non représentés) est variable et peut être piloté par un actionneur électromagnétique 22. Toutefois, on peut bien entendu envisager sans sortir du cadre de l'invention un compresseur de conception différente, par exemple un compresseur doté d'une vanne de commande permettant de modifier sa cylindrée.

Le véhicule 2 comporte un groupe moto-ventilateur 24 (en général placé après le radiateur en mode aspirant, mais sur la figure 1 représenté en mode soufflant) et une entrée d'air 26. Le groupe 24 et l'entrée d'air 26 sont disposés de manière à permettre la génération d'un flux d'air schématiquement représenté par les flèches 28 sur la figure 1. Le flux d'air schématisé par les flèches 28 rencontre d'abord le condenseur 18 puis le radiateur 8. De ce fait, on maximise les échanges thermiques par convection du radiateur 8 et du condenseur 18.

En référence à la figure 1, on a schématiquement représenté un ensemble de refroidissement 30 du véhicule 2. L'ensemble 30 comprend le système 4, le système 14 et le groupe 24. On a aussi schématiquement représenté la valise de refroidissement 32. Dans l'exemple illustré, la valise de refroidissement 32 est constituée du radiateur 8, du condenseur 18 et du groupe moto-ventilateur 24.

Le véhicule 2 comporte un dispositif de pilotage 34. Le dispositif 34 a pour but de piloter l'ensemble 30 de manière à gérer simultanément le refroidissement par le système 4 et la climatisation par le système 14. Le dispositif 34 comporte une boucle de régulation 36 et un module de pilotage 38. Le module 38 a pour fonction d'émettre une intensité électrique $i_{alim}$ d'alimentation de l'actionneur 22. En fonction de l'intensité $i_{alim}$, l'angle du plateau 21 est modifié. La cylindrée du compresseur 20 est ainsi pilotée par le module 38.

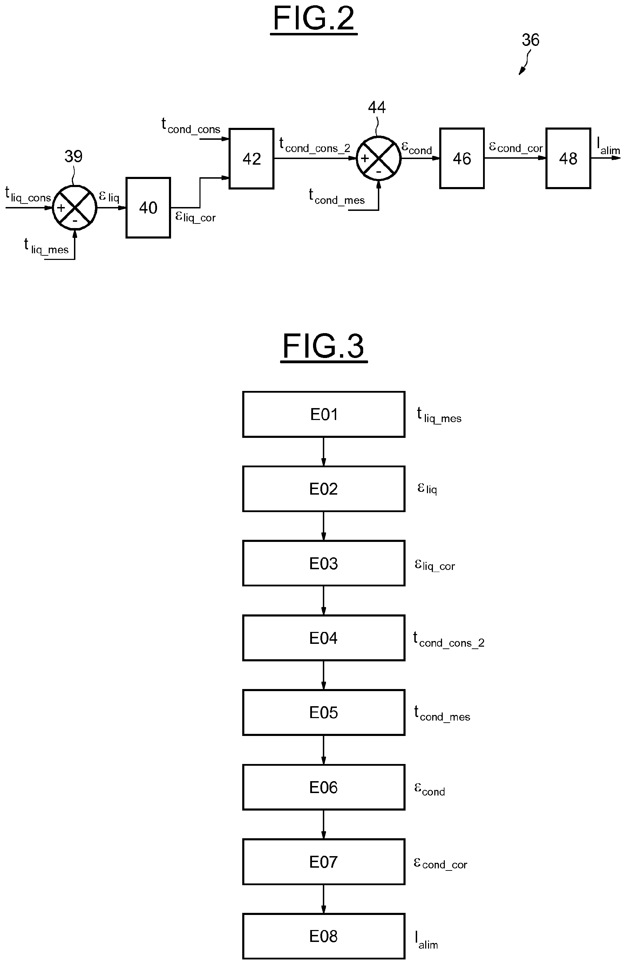

En référence à la figure 2, on a schématiquement représenté par un schéma-bloc la boucle de régulation 36.

La boucle 36 comprend un comparateur 39. Le comparateur 39 calcule l'écart $\varepsilon_{liq}$ de température de liquide de refroidissement. L'écart $\varepsilon_{liq}$ correspond à la différence entre une consigne $t_{liq\_cons}$ de température du liquide de refroidissement et une température mesurée $t_{liq\_mes}$ du liquide de refroidissement. Dans l'exemple illustré, la consigne $t_{liq\_cons}$ est comprise entre 105 °C et 120 °C, de préférence entre 110 °C et 115 °C. La température $t_{liq\_mes}$ est mesurée par un capteur de température (non représenté) incorporé dans le circuit 6 au niveau du radiateur 8. Toutefois, on peut sans sortir du cadre de l'invention envisager d'incorporer ce capteur à un endroit différent du circuit 6.

La boucle 36 comprend un correcteur 40. Le correcteur 40 recueille l'écart $\varepsilon_{liq}$. Dans l'exemple illustré, le correcteur 40 est un correcteur proportionnel intégral dérivé (PID). Un tel correcteur est choisi pour une correction efficace sans augmenter la complexité de la boucle de régulation 36. Le correcteur 40 détermine et délivre un écart corrigé $\varepsilon_{liq\_cor}$ de température de liquide de refroidissement.

La boucle 36 comprend en outre un bloc de détermination 42. Le bloc 42 recueille l'écart corrigé $\varepsilon_{liq\_cor}$ délivré par le correcteur 40. Le bloc 42 recueille également une consigne $t_{cond\_cons}$ de température de l'air de l'évaporateur pour les besoins du confort thermique à l'intérieur de l'habitacle du véhicule. La consigne $t_{cond\_cons}$ est comprise entre 2 °C et 15 °C. Le bloc 42 sélectionne la valeur maximale entre l'écart corrigé $\varepsilon_{liq\_cor}$ et la consigne $t_{cond\_cons}$. Le bloc 42 émet une consigne sélectionnée $t_{cond\_cons\_2}$.

La boucle 36 comprend un comparateur 44. Le comparateur 44 recueille la consigne sélectionnée $t_{cond\_cons\_2}$ émise par le bloc 42. Le comparateur 44 recueille aussi une température mesurée $t_{cond\_mes}$ de l'air sortant de l'évaporateur 23. La température $t_{cond\_mes}$ peut être mesurée par un capteur de température disposé sur la surface de l'évaporateur 23 ou en sortie côté air de l'évaporateur 23. Le comparateur 44 calcule la différence entre la consigne sélectionnée $t_{cond\_cons\_2}$ et la température $t_{cond\_mes}$. Cette différence correspond à un écart $\varepsilon_{cond}$ de température de l'évaporateur.

La boucle 36 comporte un correcteur 46. Le correcteur 46 recueille l'écart $\varepsilon_{cond}$ calculé par le comparateur 44. Le correcteur 46 est un correcteur proportionnel intégral dérivé (PID). De même que pour le correcteur 40, ce type de correcteur est choisi pour une correction efficace sans augmenter la complexité de la boucle de régulation 36. Le correcteur 46 détermine et délivre en sortie un écart corrigé $\varepsilon_{cond\_cor}$ de température de l'évaporateur 23. L'écart corrigé $\varepsilon_{cond\_cor}$ permet d'obtenir l'intensité $i_{alim}$ que l'on souhaite fournir à l'actionneur électromagnétique 22 pour une gestion optimale du refroidissement par le système 4 et de la climatisation par le système 14. Plus précisément, l'intensité $i_{alim}$ est lue dans une cartographie 48 contenant des valeurs d'intensité d'alimentation $i_{alim}$ en fonction d'un écart corrigé $\varepsilon_{cond\_cor}$. Dans un mode de réalisation en variante, le correcteur 46 est conçu de telle sorte que la valeur de l'écart corrigé $\varepsilon_{cond\_cor}$ corresponde à la valeur en Ampères (A) de l'intensité $i_{alim}$.

En référence à la figure 3, on a schématiquement représenté un procédé pouvant être mis en oeuvre grâce au dispositif 34 et à l'ensemble 30.

Au cours d'une première étape E01, on mesure la température $t_{liq\_mes}$.

Au cours d'une deuxième étape E02, on calcule l'écart $\varepsilon_{liq}$ en appliquant l'équation suivante :

$$\varepsilon_{liq} = t_{liq\_cons} - t_{liq\_mes}$$

Au cours d'une troisième étape E03, on met en oeuvre une correction proportionnelle intégrale dérivée (PID) de l'écart $\varepsilon_{liq}$. De ce fait, on calcule l'écart corrigé $\varepsilon_{liq\_cor}$.

Au cours d'une étape E04 suivante, on choisit la valeur maximale entre l'écart corrigé $\varepsilon_{liq\_cor}$ et la consigne $t_{cond\_cons}$. De ce fait, on calcule la consigne $t_{cond\_cons\_2}$ en appliquant l'équation :

$$t_{cond\_cons\_2} = \max(t_{cond\_cons}, \varepsilon_{liq\_cor})$$

Au cours de la cinquième étape E05, on mesure la température tcond_mes.

Au cours d'une étape E06 suivante, on calcule l'écart $\varepsilon_{cond}$ en appliquant l'équation suivante :

$$\varepsilon_{cond} = t_{cond\_cons\_2} - t_{cond\_mes}$$

Au cours de la septième étape E07, on met en oeuvre une correction proportionnelle intégrale dérivée (PID) de l'écart $\varepsilon_{cond}$. Ce faisant, on calcule l'écart corrigé $\varepsilon_{cond\_cor}$.

Au cours d'une huitième étape E08, on détermine l'intensité $i_{alim}$ en fonction de l'écart corrigé par lecture dans la cartographie 48. Toujours lors de l'étape E08, on alimente l'actionneur 22, au moyen du module de pilotage 38, avec l'intensité $i_{alim}$.

Au moyen du dispositif 34 et du procédé de pilotage de la figure 3, il est possible de piloter le compresseur 20 de manière à assurer une régulation de la température du liquide de refroidissement circulant dans le circuit 6 et de la température de l'évaporateur 23. Ce faisant, on assure une gestion simultanée du système de refroidissement 4 et du système de climatisation 14. Grâce à cette gestion simultanée, on peut assurer un fonctionnement continu de la climatisation du véhicule 2 tout en refroidissant efficacement les composants du moteur à combustion interne et du système de refroidissement 4 dans toutes conditions de fonctionnement du véhicule 2. On assure ainsi la tenue et la durabilité des pièces constituant le moteur à combustion interne et le système de refroidissement 4 tout en préservant le confort des passagers du véhicule 2.

## Revendications

1. Dispositif de pilotage (34) d'un ensemble de refroidissement (30) pour véhicule automobile (2) comportant un compresseur de climatisation (20) à pilotage externe, un radiateur de refroidissement (8) et un condenseur (18) situé en amont du radiateur (8) dans le sens du flux d'air, le dispositif (34) comportant une boucle de régulation (36) de la température d'un liquide de refroidissement circulant dans ledit radiateur de refroidissement (8), la boucle de régulation (36) étant apte à délivrer un premier écart corrigé ($\varepsilon_{cond\_cor}$), ledit dispositif (34) comportant un module de pilotage (38) du compresseur de climatisation (20) en fonction du premier écart corrigé ($\varepsilon_{cond\_cor}$), la boucle de régulation (36) comprenant un premier comparateur (44) apte à déterminer un premier écart ($\varepsilon_{cond}$) entre une première consigne ($t_{cond\_cons\_2}$) et une température mesurée ($t_{cond\_mes}$) d'un évaporateur de climatisation (23) de l'ensemble de refroidissement (30) du véhicule automobile (2), et un premier correcteur (46) capable de corriger ledit premier écart ($\varepsilon_{cond}$) pour délivrer ledit premier écart corrigé ($\varepsilon_{cond\_cor}$), **caractérisé en ce que** la boucle de régulation (36) comprend un second comparateur (39) apte à déterminer un second écart ($\varepsilon_{liq}$) entre une deuxième consigne ($t_{liq\_cons}$) et une température mesurée ($t_{liq\_mes}$) du liquide de refroidissement circulant dans ledit radiateur de refroidissement (8), et un second correcteur (40) capable de corriger le second écart ($\varepsilon_{liq}$) pour calculer un second écart corrigé ($\varepsilon_{liq\_cor}$) et **en ce que** la boucle de régulation (36) comprend un bloc de détermination (42) de ladite première consigne ($t_{cond\_cons\_2}$), ledit bloc de détermination (42) choisissant la valeur maximale entre ledit second écart corrigé ($\varepsilon_{liq\_cor}$) et une troisième consigne ($t_{cond\_cons}$) de préférence comprise entre 2 °C et 15 °C.

2. Dispositif (34) selon la revendication 1, dans lequel le module de pilotage (38) est capable de piloter la cylindrée du compresseur de climatisation (20).

3. Dispositif (34) selon la revendication 1 ou 2, dans lequel le module de pilotage (38) comprend une cartographie (48) dans laquelle sont stockées des valeurs d'une intensité de pilotage ($i_{alim}$) d'un actionneur électromagnétique (22) de la rotation d'un plateau support de piston (21) du compresseur de climatisation (20) en fonction du premier écart corrigé ($\varepsilon_{cond\_cor}$).

4. Dispositif (34) selon la revendication 3, dans lequel ledit premier correcteur (46) est un correcteur proportionnel intégral dérivé.

5. Dispositif (34) selon la revendication 4, dans lequel ladite deuxième consigne ($t_{liq\_cons}$) est comprise entre 105 °C et 120 °C, de préférence entre 110 °C et 115 °C.

6. Dispositif (34) selon la revendication 4 ou 5, dans lequel ledit second correcteur (40) est un correcteur proportionnel intégral dérivé.

7. Procédé de pilotage d'un ensemble de refroidissement (30) doté d'un radiateur de refroidissement (8) et un condenseur (18) situé en amont du radiateur (8) dans le sens du flux d'air, d'un compresseur de climatisation (20) à pilotage externe et d'un dispositif (34) selon l'une quelconque des revendications 1 à 6, dans lequel on met en oeuvre une régulation de la température du liquide de refroidissement en pilotant ledit compresseur de climatisation.

**Patentansprüche**

1. Vorrichtung zur Steuerung (34) einer Kühlanordnung (30) für ein Kraftfahrzeug (2), beinhaltend einen Klimaanlagenkompressor (20) mit externer Steuerung, einen Kühlradiator (8) und einen in Richtung des Luftstroms stromauf des Radiators (8) angeordneten Kondensator (18), wobei die Vorrichtung (34) einen Regelkreis (36) zur Regelung der Temperatur einer in dem Kühlradiator (8) zirkulierenden Kühlflüssigkeit beinhaltet, wobei der Regelkreis (36) geeignet ist, eine erste korrigierte Abweichung ($\varepsilon_{cond\_cor}$) auszugeben, wobei die Vorrichtung (34) ein Steuerungsmodul (38) zur Steuerung des Klimaanlagenkompressors (20) in Abhängigkeit von der ersten korrigierten Abweichung ($\varepsilon_{cond\_cor}$) beinhaltet, wobei der Regelkreis (36) einen ersten Komparator (44) umfasst, der geeignet ist, eine erste Abweichung ($\varepsilon_{cond}$) zwischen einem ersten Sollwert ($t_{cond\_cons\_2}$) und einer gemessenen Temperatur ($t_{cond\_mes}$) eines Klimaanlagenverdampfers (23) der Kühlanordnung (30) des Kraftfahrzeugs (2) zu bestimmen, und einen ersten Korrektor (46), der in der Lage ist, die erste Abweichung ($\varepsilon_{cond}$) zu korrigieren, um die erste korrigierte Abweichung ($\varepsilon_{cond\_cor}$) auszugeben, **dadurch gekennzeichnet, dass** der Regelkreis (36) einen zweiten Komparator (39) umfasst, der geeignet ist, eine zweite Abweichung ($\varepsilon_{liq}$) zwischen einem zweiten Sollwert ($t_{liq\_cor}$) und einer gemessenen Temperatur ($t_{liq\_mes}$) der in dem Kühlradiator (8) zirkulierenden Kühlflüssigkeit zu bestimmen, und einen zweiten Korrektor (40), der in der Lage ist, die zweite Abweichung ($\varepsilon_{liq}$) zu korrigieren, um eine zweite korrigierte Abweichung ($\varepsilon_{liq\_cor}$) zu berechnen, und dadurch, dass der Regelkreis (36) einen Bestimmungsblock (42) zur Bestimmung des ersten Sollwerts ($t_{cond\_cons\_2}$) umfasst, wobei der Bestimmungsblock (42) den Maximalwert zwischen der zweiten korrigierten Abweichung ($\varepsilon_{liq\_cor}$) und einem dritten Sollwert ($t_{cond\_cons}$) von bevorzugt zwischen 2 °C und 15 °C wählt.

2. Vorrichtung (34) nach Anspruch 1, bei der das Steuerungsmodul (38) in der Lage ist, den Hubraum des Klimaanlagenkompressors (20) zu steuern.

3. Vorrichtung (34) nach Anspruch 1 oder 2, bei der das Steuerungsmodul (38) ein Kennfeld (48) umfasst, in dem Werte einer Steuerungsstromstärke ($i_{alim}$) eines elektromagnetischen Aktors (22) für die Drehung einer Kolbenstützplatte (21) des Klimaanlagenkompressors (20) in Abhängigkeit von der ersten korrigierten Abweichung ($\varepsilon_{cond\_cor}$) gespeichert sind.

4. Vorrichtung (34) nach Anspruch 3, bei welcher der erste Korrektor (46) ein abgeleiteter Proportional-Integral-Korrektor ist.

5. Vorrichtung (34) nach Anspruch 4, bei welcher der zweite Sollwert ($t_{liq\_cons}$) zwischen 105 °C und 120 °C, bevorzugt zwischen 110 °C und 115 °C beträgt.

6. Vorrichtung (34) nach Anspruch 4 oder 5, bei welcher der zweite Korrektor (40) ein abgeleiteter Proportional-Integral-Korrektor ist.

7. Verfahren zur Steuerung einer Kühlanordnung (30), die mit einem Kühlradiator (8) und einem in Richtung des Luftstroms stromauf des Radiators (8) angeordneten Kondensator (18), einem Klimaanlagenkompressor (20) mit externer Steuerung und einer Vorrichtung (34) nach einem der Ansprüche 1 bis 6 ausgestattet ist, bei dem eine Regelung der Temperatur der Kühlflüssigkeit ausgeführt wird, indem der Klimaanlagenkompressor gesteuert wird.

**Claims**

1. Device (34) for controlling a cooling assembly (30) for a motor vehicle (2) comprising an externally-controlled air-conditioning compressor (20), a cooling radiator (8) and a condenser (18) situated upstream of the radiator (8) in the direction of the flow of air, the device (34) comprising a loop (36) for regulating the temperature of a coolant circulating in said cooling radiator (8), the regulation loop (36) being able to deliver a first corrected difference ($\varepsilon_{cond\_cor}$), said device (34) comprising a module (38) for controlling the air-conditioning compressor (20) as a function of the first corrected difference ($\varepsilon_{cond\_cor}$), the regulation loop (36) comprising a first comparator (44) capable of determining a first difference ($\varepsilon_{cond}$) between a first setpoint ($t_{cond\_cons\_2}$) and a measured temperature ($t_{cond\_mes}$) of an air-conditioning evaporator (23) of the cooling assembly (30) of the motor vehicle (2), and a first corrector (46) capable of correcting said first difference ($\varepsilon_{cond}$) to deliver said first corrected difference (($\varepsilon_{cond\_cor}$), **characterized in that** the regulation loop (36) comprises a second comparator (39) capable of determining a second difference ($\varepsilon_{liq}$) between a second setpoint ($t_{liq\_cons}$) and a measured temperature ($t_{liq\_mes}$) of the coolant circulating in said cooling radiator (8), and a second corrector (40) capable of correcting the second difference ($\varepsilon_{liq}$) to calculate a second corrected difference (($\varepsilon_{liq\_cor}$), and **in that** the regulation loop (36) comprises a block (42) for determining said first setpoint ($t_{cond\_cons\_2}$), said determination block (42) choosing the maximum value between said second corrected difference ($\varepsilon_{liq\_cor}$) and a third setpoint ($t_{cond\_cons}$) preferably lying between 2°C and 15°C.

2. Device (34) according to Claim 1, wherein the control module (38) is capable of controlling the swept volume of the air-conditioning compressor (20).

3. Device (34) according to Claim 1 or 2, wherein the control module (38) comprises a mapping (48) in which are stored values of a control current ($i_{alim}$) of an electromagnetic actuator (22) for actuating the rotation of a piston support plate (21) of the air-conditioning compressor (20) as a function of the first corrected difference ($\varepsilon_{cond\_cor}$).

4. Device (34) according to Claim 3, wherein said first corrector (46) is a proportional integral derivative corrector.

5. Device (34) according to Claim 4, wherein said second setpoint ($t_{liq\_cons}$) lies between 105°C and 120°C, preferably between 110°C and 115°C.

6. Device (34) according to Claim 4 or 5, wherein said second corrector (40) is a proportional integral derivative corrector.

7. Method for controlling a cooling assembly (30) provided with a cooling radiator (8) and a condenser (18) situated upstream of the radiator (8) in the direction of the flow of air, an externally-controlled air-conditioning compressor (20) and a device (34) according to any one of Claims 1 to 6, wherein a regulation of the temperature of the coolant is implemented by controlling said air-conditioning compressor.

# FIG.1

# FIG.2

# FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008034767 A1
- US 2004134204 A1
- US 5950443 A